# EUROPÄISCHE PATENTSCHRIFT

(11) **EP 1 113 909 B1**
(45) Veröffentlichungstag und Bekanntmachung des Hinweises auf die Patenterteilung: **14.05.2003**
(21) Anmeldenummer: 00954494.1
(22) Anmeldetag: 13.07.2000
(51) Int. Cl.: B26D 7/26

(54) **VORRICHTUNG SOWIE VERFAHREN ZUR SCHNEIDSPALTEINSTELLUNG**
DEVICE AND METHOD FOR ADJUSTING A CUTTING GAP
DISPOSITIF ET PROCEDE POUR LE REGLAGE DU JEU DE COUPE

(30) Priorität: 16.07.1999 DE 19933497
(43) Veröffentlichungstag der Anmeldung: 11.07.2001
(73) Patentinhaber: RIETER AUTOMATIK GmbH, D-63762 Grossostheim (DE)
(72) Erfinder: MÜLLER, Horst, D-55311 Bingen (DE); SCHULER, Michael, D-63762 Grossostheim (DE); HARWARTH, Georg, D-63755 Alzenau (DE)
(74) Vertreter: Bardehle, Heinz, Dipl.-Ing.
(86) Internationale Anmeldenummer: EP0006693
(87) Internationale Veröffentlichungsnummer: WO01005562

(56) Entgegenhaltungen:
- DE-A- 3 620 015
- FR-A- 555 151
- GB-A- 2 266 487
- US-A- 2 782 853

## Beschreibung

Die vorliegende Erfindung betrifft eine Vorrichtung zur Schneidspalteinstellung zwischen einem Schneidmesser aufweisenden um eine Rotorachse drehbaren Rotor und einem eine Schneidkante tragenden feststellbaren Gegenmesserkörper sowie ein Verfahren zur Schneidspalteinstellung gemäß dem Oberbegrifft des Anspruchs 1 und des Anspruchs 15.

Eine derartige Vorrichtung ist aus der Druckschrift DE 36 20 015 A1 bekannt. Bei dieser Vorrichtung wird der Schneidspalt zwischen dem Schneidmesser aufweisenden Rotor und dem eine Schneidkante tragenden feststehenden Gegenmesserkörper durch zwei aufeinander senkrecht stehende Verstelleinrichtungen in bezug auf die Rotorachse eingestellt. Ferner wird die Parallität zur Rotorachse durch zwei voneinander unabhängig verstellbare keilförmige Stellschieber nachjustiert. Eine derartig aufgebaute Verstellmechanik zur Schneidspalteinstellung benötigt mindestens vier voneinander unabhängige Antriebe, um die Schneidkante genau auszurichten. Ferner hat die bekannte Vorrichtung den Nachteil, daß ein Nachstellen des Schneidspaltes nur im Stillstand der Maschine, d.h. bei Stillstand des Schneidmesser aufweisenden Rotors, beispielsweise mittels Fühlerlehren oder anderer Meßhilfen einstellbar ist.

Aus der Druckschrift DE 692 11 672 T1 ist eine Schneidvorrichtung bekannt, bei der eine Klingenwalze eine Klinge aufweist, die radial in dem Walzenkörper mittels einer Linearführung verstellbar ist und mittels Federelementen in Position gehalten wird.

Aus der Druckschrift EP 0 841 132 ist ein Verfahren bekannt, bei dem ein Schneidmesser oder eine glatte Gegenwalze über Heiz- oder Kühlelemente zur Schneidspalteinstellung erwärmt bzw. gekühlt werden.

Aus der Druckschrift EP 0 318 174 ist eine Schneidkante bekannt, die von einem Schenkel eines U-förmigen Trägers gestützt wird, wobei der Abstand der Schenkel des Trägers mittels Schrauben zur Spalteinstellung beim Wartungsbetrieb verringert werden kann.

Aufgabe der Erfindung ist es, eine Verstelimechanik zu schaffen, die unter Wahrung der Parallelität zwischen Schneidmesser aufweisendem drehbaren Rotor und Schneidkante mittels einer Antriebseinheit auch während des Betriebs eingestellt und nachgeregelt werden kann.

Diese Aufgabe wird mit dem Gegenstand der Ansprüche 1 und 15 gelöst. Merkmale bevorzugter Ausführungsformen werden in den Unteransprüchen beschrieben.

Zur Lösung der Aufgabe ist vorgesehen, als Antriebseinheit zur Schneidspalteinstellung Druckelemente einzusetzen. Dazu weist der Gegenmesserkörper ein U-förmiges Profil auf mit einem ersten Schenkel, der die Schneidkante bildet und einem zweiten Schenkel der den Gegenmesserkörper stützt. Zwischen dem ersten und dem zweiten Schenkel des U-profilförmigen Gegenmesserkörpers sind Drukkelemente zum elastischen Auseinanderbiegen des Gegenmesserkörpers zur Feineinstellung des Schneidspaltes angeordnet.

Diese Lösung hat den Vorteil, daß selbst im Submikrometerbereich der Schneidspalt zwischen Schneidkante und Schneidmessern auch während des Betriebes bei drehendem Rotor mit Schneidmessern nachgestellt werden kann. Die Druckelemente pressen dazu die beiden Schenkel im Submikrometerbereich auseinander und drücken damit die Schneidkante in Richtung auf die Schneidmesser des Rotors. Als Druckelemente werden vorzugsweise Peltierelemente zwischen den U-förmigen Schenkeln eingesetzt, die sich durch Anlegen einer variablen äußeren Spannung ausdehnen und somit die Schenkel auseinanderbiegen, wodurch die Schneidkante auf den Rotor zu im Submikrometerbereich bewegt wird. Diese Anordnung hat darüber hinaus den Vorteil, daß eine Rückkopplungsschleife zwischen einem Sensor und einem Peltierelement eingesetzt werden kann, so daß der Schneidspalt im Submikrometerbereich den unterschiedlichen Betriebsbedingungen angepaßt werden kann.

In einer bevorzugten Ausführungsform weist die Versteilmechanik einen in einer Linearführung geführten Schlitten auf, der den Gegenmesserkörper mit der Schneidkante trägt, wobei die Linearführung in einem geringfügig von der Parallelität zur Rotorachse abweichenden Winkel angeordnet und der Gegenmesserkörper auf dem Schlitten derart befestigt ist, daß die Parallelität von Schneidkante und Schneidmesser gewährleistet bleibt. Somit weist der Gegenmesserkörper gegenüber dem Schlitten einen äußerst spitzen Winkel auf, der dem spitzen Winkel zwischen Rotorachse und Linearführung entspricht, so daß der Gegenmesserkörper mit seiner Schneidkante völlig parallel zu der Rotorachse beim Verstellen des Schlittens auf der Linearführung bleibt.

Eine derartige Verstellmechanik hat nicht nur den Vorteil einer einzigen zentralen Linearführung, mit der eine Verstellung der Schneidkante gegenüber den Messern des Rotors möglich wird, sondern liefert ein Verstellen in den aus dem Stand der Technik bekannten zwei senkrecht aufeinanderstehenden Raumrichtungen gegenüber der Rotorachse mit nur einer Linearführung. Dieses bedeutet eine wesentliche Einsparung von Material und Kosten gegenüber den bisherigen Lösungen und bietet die Möglichkeit, die Verstellung zu automatisieren, zumal nur eine Antriebseinheit für die im spitzen Winkel zur Rotorachse angeordnete Linearführung erforderlich wird. Darüber hinaus ist es möglich, bei beispielsweise Wärmedehnung des Rotors während des Betriebes über die automatische Verstellung des Schlittens auf der Linearführung die Wärmedehnung des Rotors in seiner Wirkung auf die Schneidspalteinstellung ständig auszugleichen und anzupassen.

Der U-förmige Gegenmesserkörper hat darüber hinaus den Vorteil, daß der erste Schenkel, der die Schneidleiste trägt, elastisch verformbar und nachgiebig ist, so daß Störungen durch mikroskopisch feine Feststoffpartikel beispielsweise in den Kunststoffsträngen nicht zum Totalausfall der Schneidkante führen oder bleibende Beschädigungen an dem Messerkörper verursachen können.

In einer bevorzugten Ausführungsform weist der Gegenmesserkörper mindestens einen Sensor zur Erfassung einer Abstandsmeßgröße zwischen Schneidkante des Gegenmesserkörpers und den Schneidmessern des rotierenden Rotors auf. Damit ist der Vorteil verbunden, daß zur Nachstellung bzw. Nachführung der Schneidspalteinstellung während des Betriebs keine Erfahrungswerte tabellarisch zu erfassen und zu speichern sind, um die Schneidspalteinstellung optimal den Betriebsbedingungen anzupassen, sondern es können durch den Sensor Abstandsmeßgrößen erfaßt werden und die Schneidspalttiefe auf einem Sollwert mit Hilfe einer entsprechenden Regelungsanordnung gehalten werden.

Zur Ausbildung einer Schneidkante weist vorzugsweise der Gegenmesserkörper eine Schneidleiste auf, die sich vorzugsweise über die volle Länge des Gegenmesserkörpers erstreckt. Eine derartige Schneidleiste hat den Vorteil, daß sie jederzeit ausgewechselt werden kann, ohne gleichzeitig einen neuen Gegenmesserkörper fertigen zu müssen.

Bei einer bevorzugten Ausführungsform der Erfindung werden als Druckelemente Thermobolzen eingesetzt, die entweder aufgrund zunehmender Umgebungstemperatur oder aufgrund aktiver Heizung oder Abkühlung eine Längenänderung bewirken und damit eine Änderung beim elastischen Auseinanderbiegen des Gegenmesserkörpers hervorrufen, so daß eine Schneidspalteinstellung, und wenn ein Sensor eingesetzt wird, eine Schneidspaltregelung während des Betriebs möglich wird.

Schließlich sind als Druckelemente vorzugsweise hydraulisch oder pneumatisch angetriebene Stellglieder zwischen den Schenkeln des Gegenmesserkörpers einsetzbar, die jedoch vom Raum- und Zuleitungsbedarf besonders ausgestaltet sein müssen. Als Druckelemente sind vorzugsweise auch motorisch angetriebene Stellglieder möglich, die vorzugsweise über eine gemeinsame Nockenwelle einstellbar sind.

Die offene Flanke des U-profilformigen Gegenmesserkörpers weist vorzugsweise eine Abdeckung auf, die den Vorteil hat, daß die Druckelemente vor Spritzwasser und Granulat geschützt sind.

In einer weiteren bevorzugten Ausführungsform gewährleisten aufeinander ausgerichtete Öffnungen in der Schneidleiste und im Gegenmesserkörper ein Erfassen der Schneidspalttiefe mittels mindestens eines Sensors. Dieser Sensor ist vorzugsweise im Mittenbereich angeordnet, so daß ein Durchwölben des Gegenmesserkörpers im Mittenbereich unmittelbar erfaßt wird und bei Vorhandensein von Druckelementen zwischen den Schenkeln eines U-profilförmigen Gegenmesserkörpers die Aufweitung des Schneidspalts im Mittenbereich unmittelbar kompensiert werden kann.

Beim Einsatz von zwei Sensoren werden diese gleichmäßig auf der Länge des Gegenmesserkörpers verteilt, so daß der Gegenmesserkörper drei Bereiche aufweist, zwischen denen Sensoren zur Erfassung der Schneidspalttiefe angeordnet sind. Durch Zusammenwirken von vorzugsweise mindestens drei Druckelementen mit einem oder mehreren Sensoren können lastbedingte und/oder temperaturbedingte Veränderungen des Schneidspaltes über einen Regelkreis unter Rückkopplung der durch Sensoren erfaßten Schneidspaltgrößen an ein Regel- und Steuergerät durch die Druckelemente im Gegenmesserkörper ausgeglichen werden. Dazu ist in vorteilhafter Weise mit den Druckelementen ein Regeln der Einstellung des Gegenmesserkörpers von 0,01 mm bis 0,5 mm bei einer Genauigkeit von 0,001 mm regelbar. Das Regel- und Steuergerät kann auch ein Zusammenwirken von Schlitten und Linearführung für eine grobe Nachstellung bis zu 10 mm im Abstand zwischen den Messern des Rotors und der Schneidkante des Gegenmesserkörpers bewirken.

Die Verstellung des Schlittens gegenüber der Linearführung kann durch eine Mikrometerschraube bewirkt werden, die von einem Schrittmotor automatisch angetrieben wird, und der, falls erforderlich, über das Regel- und Steuergerät mit einem der Sensoren rückgekoppelt ist. Durch Verwendung einer Mikrometerschraube und eines spitzen Winkels kann die Grobeinstellung auch für eine Feinjustage im Submillimeterbereich eingesetzt werden, jedoch nur, wenn keine Deformation des Gegenmesserkörpers auftritt bzw. auftretende Deformationen nicht im Submikrometerbereich liegen.

Die vorliegende Erfindung ist insbesondere zur Verwendung der Vorrichtung für die Granulierung von thermoplastischen Kunststoffsträngen geeignet. Derartige Kunststoffstränge werden schmelzflüssig aus einer Düsenplatte gepreßt und üblicherweise auf eine Temperatur unterhalb der Schmelztemperatur abgekühlt, so daß nichtklebende Kunststoffstränge über ein Walzenpaar den Schneidmessern einer Granuliereinrichtung zugeführt werden können.

Die Erfindung bezieht sich vorzugsweise auch auf ein Verfahren zur Schneidspalteinstellung zwischen einem Schneidmesser aufweisenden um eine Rotorachse drehbaren Rotor und einem eine Schneidkante tragenden feststellbaren Gegenmesserkörper, der mittels einer zu der Rotorachse senkrecht wirkenden Verstellmechanik gegenüber den Messern des Rotors zur Spaltoptimierung einstellbar ist. Ein derartiges Verfahren weist folgende Verfahrensschritte auf:
1. Erfassen einer Schneidspalttiefe bei rotierendem Rotor und feststehendem Gegenmesserkörper mittels mindestens eines Sensors,
2. Feinregulieren der Schneidspalttiefe in Zusammenwirkung des Sensors und eines Mikrometerschraubenantriebs einer spitzwinklig zur Rotorachse angeordneten Linearführung, deren Schlitten die Schneidkante des Gegenmesserkörpers parallel zur Rotorachse hält und
3. Nachregeln des Schneidspalts mittels eines Steuer- und Regelgerätes, das die erfaßte Schneidspalttiefe mit vorgegebenen Sollwerten vergleicht und über den Mikrometerschraubenantrieb die Schneidspalttiefe optimal regelt.

Dieses erfindungsgemäße Verfahren hat gegenüber dem Stand der Technik den Vorteil, daß nur ein Stellantrieb und ein Sensor sowie ein Regelgerät erforderlich sind, um die Schneidspalttiefe optimal zu regeln. Jedoch kann mit diesem Verfahren keine Verformung und/oder Durchbiegung der Schneidkante eines Gegenmesserkörpers ausgeglichen werden. Dieses wird durch ein Verfahren mit folgenden Verfahrensschritten erreicht:
1. Erfassen einer Schneidspalttiefe bei rotierendem Rotor und feststehendem Gegenmesserkörper mittels mindestens eines Sensors,
2. Grobes Heranfahren der Schneidkante an die rotierenden Schneidmesser unter Verstellung eines Schlittens gegenüber einer Linearführung, die im spitzen Winkel zur Rotorachse angeordnet ist,
3. Feinregulieren der Schneidspalttiefe durch Überwachen des Schneidspalts im Betrieb mittels mindestens eines im Gegenmesserkörper angeordneten Sensors unter Zusammenwirken mit einem Steuer- und Regelgerät,
4. Auswertung und Vergleich der gemessenen Abstandsgrößen zwischen rotierendem Rotor und feststehender Schneidkante mit Sollwerten in dem Steuer- und Regelgerät,
5. Nachführen des Schneidspalts mittels Verstellanweisung an Druckelemente, die im Gegenmesserkörper angeordnet sind und auf einen elastischen Schenkel, der die Schneidkante des Gegenmesserkörpers trägt, wirken.

Dieses Verfahren hat den Vorteil, daß im Betrieb auch die kleinsten Verbiegungen und ein Verschleiß der Schneidkante selbst im Submikrometerbereich nachjustiert und ausgeglichen werden können, so daß die Schneidkante geradlinig und parallel mit vorbestimmtem Schneidspalt zu den Schneidmessern des Rotors gehalten werden kann.

Weitere Vorteile, Merkmale und Anwendungsmöglichkeiten der Erfindung werden nun anhand eines Ausführungsbeispiels unter Bezugnahme auf die beigefügten Zeichnungen näher erläutert.
- Fig. 1: ist ein prinzipieller Querschnitt einer Anordnung einer Vorrichtung zur Schneidspalteinstellung gemäß einer Ausführungsform der vorliegenden Erfindung,
- Fig. 2: ist ein Ausschnitt einer Längsansicht einer Ausführungsform der vorliegenden Erfindung.

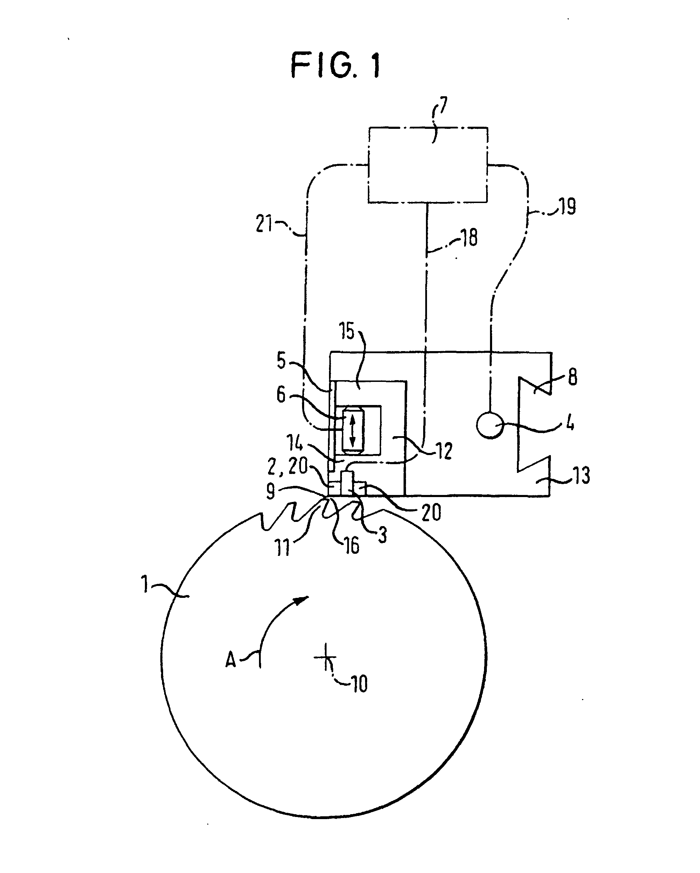

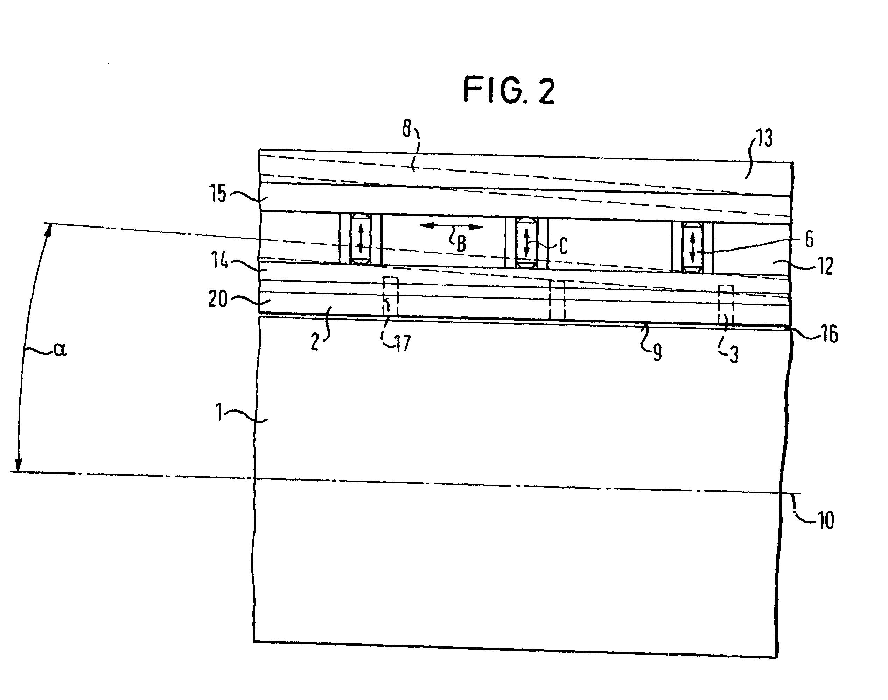

Fig. 1 zeigt eine Vorrichtung zur Schneidspalteinstellung zwischen einem Schneidmesser 11 aufweisenden um seine Rotorachse 10 drehbaren Rotor 1 und einem eine Schneidkante 9 tragenden feststellbaren Gegenmesserkörper 12, der mittels einer zu der Rotorachse 10 radial wirkenden Verstellmechanik gegenüber den Schneidmessern 11 des Rotors 1 zur Spaltoptimierung einstellbar ist. Die Verstellmechanik weist dazu, wie es in Fig. 2 deutlich dargestellt wird, einen in einer Linearführung 8 geführten Schlitten 13 auf. Die Linearführung 8 ist dazu in einem spitzen Winkel α zur Rotationsachse 10 angeordnet und der Gegenmesserkörper 12 ist derart auf dem Schlitten 13 angeordnet, daß die Parallelität von Schneidkante 9 und Schneidmesser 11 gewährleistet ist.

Ein Sensorelement 3 ist zum Erfassen einer Abstandsmeßgröße zwischen der Schneidkante 9 des Gegenmesserkörpers 12 und den Schneidmessern 11 des rotierenden Rotors 1 angeordnet.

Da in dieser Ausführungsform der Gegenmesserkörper 12 eine Schneidleiste 20 zur Bildung einer Schneidkante 9 aufweist, ist in Drehrichtung des Rotors, die durch den Pfeil A dargestellt wird, eine Öffnung 17 in die Schneidleiste 20 zur Aufnahme des Sensors eingearbeitet, wobei diese Öffnung mit einer Öffnung in dem Gegenmesserkörper ausgerichtet ist, um einen Sensor 3 aufzunehmen, der zum Beispiel in seinen Ausmaßen tiefer ist als die Dicke der Schneidleiste 20.

Der Sensor 3 erzeugt ein Signal, das der Abstandsgröße zwischen den Schneidmessern 11 des Rotors 1 und der Schneidkante 9 des Gegenmesserkörpers 12 entspricht und das über die Zuleitung 18 einem Steuer- und Regelgerät 7 zugeführt wird. Dieses Steuer- und Regelgerät vergleicht die erfaßte Abstandsgröße mit entsprechend gespeicherten und vorbestimmten Sollwerten und gibt eine Stellanweisung über die Leitung 19 an vorzugsweise eine schrittmotorgetriebene Mikrometerschraube, die auf den Verstelltrieb 4 wirkt und den Schlitten 13 in der Linearführung 8 spitzwinklig zur Rotorachse 10 verschiebt, so daß sich die Spalttiefe ändert. Auf diese Weise kann vorteilhaft die Schneidspalteinstellung auch während des Betriebs ständig angepaßt und nachjustiert werden. Mit der Linearführung 8 allein kann lediglich die Schneidspalttiefe insgesamt, d.h. für die gesamte Schneidkante 9, gegenüber den Schneidmessern 11 des Rotors 1 verändert oder nachgeregelt werden. In einer Vorjustage kann mit Hilfe der Linearführung eine Durchmesservariation des Rotors von 10 mm ausgeglichen werden. Aufgrund der schrittmotorgetriebenen Mikrometerschraube kann im Betrieb im Submillimeterbereich die Schneidspalttiefe nachgeregelt werden.

Fig. 1 zeigt neben der grundlegenden Regelbarkeit der Schneidspalttiefe mittels einer Linearführung eine weitere Nachjustage durch Schneidspalteinstellung mittels spezieller Formgebung des Querschnitts des Gegenmesserkörpers 12. Der Gegenmesserkörper 12 hat in dieser Ausführungsform nach Fig. 1 einen U-förmigen Querschnitt mit einem ersten Schenkel 14 und einem zweiten Schenkel 15. Zwischen den Schenkeln 14 und 15 ist in dieser Prinzipskizze der Fig. 1 ein Druckelement 6 skizziert, das in dieser Ausführungsform einen Thermobolzen darstellt. Dieser Thermobolzen kann beheizt werden, so daß er sich ausdehnt und die beiden Schenkel des U-profilförmigen Gegenmesserkörpers 12 auseinanderdrückt. Dazu kann der Thermobolzen mittels eines Heizstromes, der über die Zuleitung 21 zugeführt wird, auf unterschiedlicher Temperatur gehalten werden.

Es können mehrere Thermobolzen zwischen den Schenkeln 14 und 15 verteilt auf die Länge des Gegenmesserkörpers 12 eingebaut sein und über die Zuleitung 21 mit dem Steuer- und Regelgerät 7 zusammenwirken. Damit werden vorteilhaft Verbiegungen und Verwölbungen der Messerkante ausgeglichen, indem durch unterschiedliche Aufheizung der Thermobolzen der erste Schenkel im Mikrometerbereich zwischen 0,5 µm und 0,5 mm gegenüber dem zweiten Schenkel 15 elastisch verformt wird, so daß die Schneidkante 9 in Richtung auf die Schneidmesser 11 des Rotors 1 gepreßt wird. Dazu stützt sich der zweite Schenkel 15 des Gegenmesserkörpers 12 gegen den Schlitten 13 ab, wobei eine Abdeckung 5 über der offenen Flanke des U-profilförmigen Gegenmesserkörpers 12 sowohl den Sensor als auch das Druckelement vor Verschmutzung schützt.

Der Sensor 3 umfaßt in dieser Ausführungsform ein Wirbelstrommeßgerät, das elektrische Signale über die Zuleitung 18 zum Steuer- und Regelgerät 7 in Abhängigkeit von dem Abstand zu dem Rotor übermittelt. Jedoch sind auch optische und elektronische oder elektroakustische Sensoren für diese Anwendung vorteilhaft geeignet.

Fig. 2 zeigt den Ausschnitt einer Längsansicht einer Ausführungsform der vorliegenden Erfindung zur Schneidspalteinstellung. Dazu sind in Längsrichtung versetzt mehrere, auf diesem Ausschnitt drei Sensoren 3 und drei Druckelemente in dem U-profilförmig ausgebildeten Gegenmesserkörper 12 angeordnet. Die Abdeckung 5, die in Fig. 1 zu sehen ist, ist in Fig. 2 weggelassen, um die Position der Druckelemente 6 sichtbar zu machen. Die Druckelemente 6 sind zwischen den Schenkeln 14 und 15 des Gegenmesserkörpers 12 eingespannt und reagieren in dieser Ausführungsform als Thermobolzen auf einen Heizstrom, der von dem Steuer- und Regelgerät 7 geliefert wird.

Mit gestrichelten Linien ist die Richtung der Linearführung gekennzeichnet, deren Schlitten 13 den Gegenmesserkörper 12 trägt und parallel zum Umfang und zur Achse 10 des Rotors 1 hält. Durch die gestrichelten Linien der Linearführung 8 wird der spitze Winkel α sichtbar, indem die Linearführung 8 gegenüber dem Rotor 1 wirksam wird. Durch einen nichtgezeigten Schrittmotor kann der Schlitten 13 in Pfeilrichtung B gegenüber der feststehenden Linearführung verschoben werden. Bei dieser Verschiebung wird der Schneidspalt parallel verändert. Durch die Druckelemente 6, die die Schenkel 14 und 15 des Gegenmesserkörpers 12 elastisch auseinanderbiegen, können insbesondere Verformungen und Verbiegungen der Schneidkante 9 auf ihrer Länge gegenüber dem Rotor im Submikrometerbereich ausgeglichen werden.

## Patentansprüche

1. Vorrichtung zur Schneidspalteinstellung zwischen einem Schneidmesser (11) aufweisenden um eine Rotorachse (10) drehbaren Rotor (1) und einem eine Schneidkante (9) tragenden, feststellbaren Gegenmesserkörper (12), der mittels einer zu der Rotorachse (10) radial wirkenden Verstellmechanik gegenüber den Schneidmessem (11) des Rotors (1) zur Spaltoptimierung einstellbar ist, wobei der Gegenmesserkörper (12) ein U-förmiges Profil aufweist, mit einem ersten Schenkel (14), der die Schneidkante (9) bildet, und einem zweiten Schenkel (15), der den Gegenmesserkörper (12) stützt,
**dadurch gekennzeichnet, daß**
zwischen den Schenkeln (14, 15) des U-profilförmigen Gegenmesserkörpers (12) Druckelemente (6) zum elastischen Auseinanderbiegen der Schenkel (14, 15) des Gegenmesserkörpers (12) angeordnet sind, wobei die Druckelemente (6) auf der Innenseite des zweiten oder ersten Schenkels fixiert sind und gegen die Innenseite des ersten bzw. zweiten Schenkels pressend angeordnet sind.

2. Vorrichtung nach Anspruch 1,
**dadurch gekennzeichnet, daß**
die Verstellmechanik einen in einer Linearführung (8) geführten Schlitten (13) aufweist, wobei die Linearführung (8) in einem geringfügig von Parallelität zur Rotorachse (10) abweichenden Winkel (α) angeordnet ist und der Gegenmesserkörper (12) auf dem Schlitten (13) derart angeordnet ist, daß die Parallelität zwischen Schneidkante (9) und Schneidmesser (11) beim Verstellen gewährleistet ist.

3. Vorrichtung nach Anspruch 1 oder 2, **dadurch gekennzeichnet, daß** die Vorrichtung zusätzlich einen Sensor zur Erfassung der Schneidspalttiefe zwischen Schneidkante und Schneidmesser und ein Regelgerät zur Anpassung der Schneidspalttiefe an einen Sollwert während des Schneidbetriebs aufweist.

4. Vorrichtung nach einem der vorhergehenden Ansprüche, **dadurch gekennzeichnet, daß** der Gegenmesserkörper (12) eine Schneidleiste (20) zur Ausbildung einer Schneidkante (9) aufweist.

5. Vorrichtung nach einem der vorhergehenden Ansprüche, **dadurch gekennzeichnet, daß** der U-profilförmige Gegenmesserkörper (12) auf der offenen Flanke des U-Profils eine Abdeckung (5) aufweist.

6. Vorrichtung nach Anspruch 4, **dadurch gekennzeichnet, daß** die Schneidleiste (20) mit dem Gegenmesserkörper (12) derart verbunden ist, daß aufeinander ausgerichtete Öffnungen (17) in der Schneidleiste (20) und im Gegenmesserkörper (12) ein Erfassen der Schneidspalttiefe mittels mindestens eines Sensors (3) gewährleisten.

7. Vorrichtung nach einem der vorhergehenden Ansprüche, **dadurch gekennzeichnet, daß** ein Schlitten (13), der den Gegenmesserkörper (12) trägt, gegenüber einer Linearführung (8) mittels einer schrittmotorgetriebenen Mikrometerschraube einstellbar ist.

8. Vorrichtung nach einem der vorhergehenden Ansprüche, **dadurch gekennzeichnet, daß** auf der Länge des Gegenmesserkörpers (12) mindestens drei, vorzugsweise sieben Druckelemente (6) verteilt angeordnet sind.

9. Vorrichtung nach einem der vorhergehenden Ansprüche, **dadurch gekennzeichnet, daß** die Druckelemente Thermobolzen oder Peltierelemente oder mechanische Stellglieder sind.

10. Vorrichtung nach einem der vorhergehenden Ansprüche, **dadurch gekennzeichnet, daß** auf der Länge des Gegenmesserkörpers (12) mindestens ein Sensor (3) im Mittenbereich angeordnet ist, vorzugsweise mehrere Sensoren (3) gleichmäßig auf der Länge des Gegenmesserkörpers (12) verteilt angeordnet sind.

11. Vorrichtung nach einem der vorhergehenden Ansprüche, **dadurch gekennzeichnet, daß** im Zusammenwirken von Schlitten (13) und Linearführung (8) eine grobe Nachstellung bis zu 10 mm im Abstand zwischen den Schneidmessern (11) des Rotors (1) und der Schneidkante (9) des Gegenmesserkörpers (12) einstellbar ist.

12. Vorrichtung nach einem der Ansprüche 5 bis 11, **dadurch gekennzeichnet, daß** mit den Druckelementen (6) ein Nachregeln der Einstellung des Gegenmesserkörpers (12) bis zu 0,5 mm auf 0,001 mm genau regelbar ist.

13. Vorrichtung nach einem der Ansprüche 5 bis 12, **dadurch gekennzeichnet, daß** lastbedingte und temperaturbedingte Veränderungen des Schneidspaltes (16) über einen Regelkreis unter Rückkopplung der durch Sensoren (3) erfaßten Abstandsmeßgrößen an ein Regel- und Steuergerät durch die Druckelemente (6) im Meßkörper (12) ausgleichbar sind.

14. Verwendung der Vorrichtung nach einem der vorhergehenden Ansprüche zur Granulierung von thermoplastischen Kunststoffsträngen.

15. Verfahren zur Schneidspalteinstellung zwischen einem Schneidmesser (11) aufweisenden um eine Rotorachse (10) drehbaren Rotor (1) und einem eine Schneidkante (9) tragenden, feststellbaren Gegenmesserkörper (12), der mittels einer zu der Rotationsachse (10) radial wirkenden Verstellmechanik gegenüber den Messern (11) des Rotors (1) zur Spaltoptimierung einstellbar ist, wobei der Gegenmesserkörper (12) ein U-förmiges Profil aufweist mit einem ersten Schenkel (14), der die Schneidkante (9) bildet, und einem zweiten Schenkel (15), der den Gegenmesserkörper (12) stützt, wobei zum elastischen Auseinanderbiegen der Schenkel Druckelemente zwischen den Schenkeln (14, 15) angeordnet sind, und das Verfahren folgende Verfahrensschritte aufweist:
- Grobe Einstellung einer Schneidspalttiefe im Stillstand des Rotors,
- Erfassen einer Schneidspalttiefe bei rotierendem Rotor (1) und feststehendem Gegenmesserkörper (12),
- Überwachen des Schneidspaltes (16) im Betrieb mittels mindestens eines im Gegenmesserkörper (12) angeordneten Sensors (3) unter Zusammenwirkung mit einem Steuer- und Regelgerät,
- Auswerten und Vergleich der gemessenen Abstandsgrößen zwischen rotierendem Rotor (1) und feststehender Schneidkante (9) des Gegenmesserkörpers (12) mit Sollwerten in dem Steuer- und Regelgerät,
- Nachführen des Schneidspaltes im Betrieb mittels Verstellanweisungen an die Druckelemente (6), die im Gegenmesserkörper (12) angeordnet sind.

16. Verfahren nach Anspruch 15, **dadurch gekennzeichnet, daß** zusätzlich im Betrieb eine Feinregulierung der Schneidspalttiefe in Zusammenwirken des Sensors (3) und eines Mikrometerschraubenantriebs zur Schneidspaltanspassung durchgeführt wird, der eine geringfügig von der Parallelität in einem Winkel zur Rotorachse (10) abweichend angeordneten Linearführung (8) antreibt, deren Schlitten (13) die Schneidkante (9) des Gegenmesserkörpers (12) parallel zur Rotorachse (10) hält.

## Claims

1. Device for setting the cutting gap between a rotor (1), having cutting blades (11) and rotatable about its rotor axis (10), and a counter-blade body (12), which carries a cutting edge (9), can be fixed in position and can be set relative to the cutting blades (11) of the rotor (1) for optimizing the gap by means of an adjusting mechanism acting radially relative to the rotor axis (10), the counter-blade body (12) having a U-shaped profile, with a first leg (14) which forms the cutting edge (9) and a second leg (15) which supports the counter-blade body (12), **characterized in that** pressure elements (6) for elastically bending the legs (14, 15) of the counter-blade body (12) apart are arranged between the legs (14, 15) of the U-profile-shaped counter-blade body (12), the pressure elements (6) being fixed to the inside of the second or first leg and being arranged so as to press against the inside of the first or second leg.

2. Device according to Claim 1, **characterized in that** the adjusting mechanism has a slide (13) guided in a linear guide (8), the linear guide (8) being arranged at an angle (α) deviating slightly from the parallelism to the rotor axis (10), and the counter-blade body (12) being arranged on the slide (13) in such a way that the parallelism between cutting edge (9) and cutting blade (11) is ensured during the adjustment.

3. Device according to Claim 1 or 2, **characterized in that** the device additionally has a sensor for recording the cutting-gap depth between cutting edge and cutting blade and a control unit for adaptation of the cutting-gap depth to a set point during the cutting operation.

4. Device according to one of the preceding claims, **characterized in that** the counter-blade body (12) has a cutting strip (20) for forming a cutting edge (9).

5. Device according to one of the preceding claims, **characterized in that** the U-profile-shaped counter-blade body (12) has a cover (5) on the open flank of the U-profile.

6. Device according to Claim 4, **characterized in that** the cutting strip (20) is connected to the counter-blade body (12) in such a way that openings (17), aligned with one another, in the cutting strip (20) and in the counter-blade body (12) ensure recording of the cutting-gap depth by means of at least one sensor (3).

7. Device according to one of the preceding claims, **characterized in that** a slide (13) which carries the counter-blade body (12) can be set relative to a linear guide (8) by means of a stepping-motor-operated micrometer gauge.

8. Device according to one of the preceding claims, **characterized in that** at least three, preferably seven, pressure elements (6) are arranged so as to be distributed over the length of the counter-blade body (12).

9. Device according to one of the preceding claims, **characterized in that** the pressure elements are thermal pins or Peltier elements or mechanical actuators.

10. Device according to one of the preceding claims, **characterized in that** at least one sensor (3) is arranged in the centre region on the length of the counter-blade body (12), and preferably a plurality of sensors (3) are arranged so as to be uniformly distributed over the length of the counter-blade body (12).

11. Device according to one of the preceding claims, **characterized in that** a coarse readjustment of up to 10 mm in the distance between the cutting blades (11) of the rotor (1) and the cutting edge (9) of the counter-blade body (12) can be effected in interaction between slide (13) and linear guide (8).

12. Device according to one of Claims 5 to 11, **characterized in that** a readjustment of the setting of the counter-blade body (12) of up to 0.5 mm can be accurately regulated to 0.001 mm with the pressure elements (6).

13. Device according to one of Claims 5 to 12, **characterized in that** load-induced and temperature-induced changes in the cutting gap (16), via a control loop with feedback of the measurable distance variables recorded by sensors (3) to a control unit, can be compensated for by the pressure elements (6) in the measuring body (12).

14. Use of the device according to one of the preceding claims for the granulation of thermoplastic strands.

15. Method of setting the cutting gap between a rotor (1), having cutting blades (11) and rotatable about its rotor axis (10), and a counter-blade body (12), which carries a cutting edge (9), can be fixed in position and can be set relative to the blades (11) of the rotor (1) for optimizing the gap by means of an adjusting mechanism acting radially relative to the rotation axis (10), the counter-blade body (12) having a U-shaped profile, with a first leg (14) which forms the cutting edge (9) and a second leg (15) which supports the counter-blade body (12), pressure elements being arranged between the legs (14, 15) for bending the legs apart, and the method having the following steps:
- coarse setting of a cutting-gap depth when the rotor is stopped,
- recording of a cutting-gap depth when the rotor (1) is rotating and the counter-blade body (12) is fixed,
- monitoring the cutting gap (16) during operation by means of at least one sensor (3) arranged in the counter-blade body (12) in interaction with a control unit,
- analysing and comparing the measured distance variables between rotating rotor (1) and fixed cutting edge (9) of the counter-blade body (12) with set points in the control unit,
- correction of the cutting gap during operation by means of adjusting instructions to the pressure elements (6), which are arranged in the counter-blade body (12).

16. Method according to Claim 15, **characterized in that** a fine adjustment of the cutting-gap depth is additionally carried out during operation in interaction between the sensor (3) and a micrometer-gauge drive for adaptation of the cutting gap, the micrometer-gauge drive driving a linear guide (8), which is arranged so as to deviate slightly from the parallelism at an angle to the rotor axis (10) and the slide (13) of which keeps the cutting edge (9) of the counter-blade body (12) parallel to the rotor axis (10).

## Revendications

1. Dispositif pour régler le jeu de coupe entre un rotor (1) comportant un couteau (11) et pouvant tourner autour d'un axe (10), et un corps de couteau antagoniste (12) pouvant être fixé, qui porte une arête de coupe (9) et qui peut être réglé au moyen d'un mécanisme de réglage qui agit radialement par rapport à l'axe (10) du rotor, par rapport au couteau (11) du rotor (1) pour l'optimisation du jeu, le corps de couteau antagoniste (2) possédant un profil en forme de U, et comportant une première branche (14), qui forme l'arête de coupe (9), et une seconde branche (15), qui supporte le corps de couteau antagoniste (12),
**caractérisé en ce que**
des éléments de pression (6) sont disposés entre les branches (14, 15) du corps de couteau antagoniste (12) ayant une forme profilée en U, pour écarter par flexion élastique les branches (14, 15) du corps de couteau antagoniste (12), les éléments de pression (6) étant fixés sur le côté intérieur de la seconde branche ou branche supérieure et étant disposés de manière à être pressés contre le côté intérieur de la première ou de la seconde branche.

2. Dispositif selon la revendication 1,
**caractérisé en ce que**
le mécanisme de réglage comporte un chariot (13) guidé dans un guide linéaire (8), le guide linéaire (8) étant disposé sous un angle (α) qui s'écarte légèrement du parallélisme par rapport à l'axe (10) du rotor, et le corps de couteau antagoniste (12) étant monté sur le chariot (13) de telle sorte que le parallélisme entre l'arête de coupe (9) et le couteau (11) est garanti lors du réglage.

3. Dispositif selon la revendication 1 ou 2, **caractérisé en ce que** le dispositif comporte en outre un capteur servant à détecter la profondeur de jeu de coupe entre l'arête de coupe et le couteau et un appareil de régulation pour adapter la profondeur du jeu de coupe à une valeur de consigne pendant l'opération de coupe.

4. Dispositif selon l'une des revendications précédentes, **caractérisé en ce que** le corps de couteau antagoniste (12) comporte une barrette de coupe (20) servant à former une arête de coupe (9).

5. Dispositif selon l'une des revendications précédentes, **caractérisé en ce que** le corps de coupe antagoniste (12) ayant une forme profilée en U comporte, sur le flanc ouvert du profil en U, un élément de recouvrement (5).

6. Dispositif selon la revendication 4, **caractérisé en ce que** la barrette de coupe (20) est reliée au corps de couteau de coupe (12) de telle sorte que les ouvertures (19), alignées les unes sur les autres, formées dans la barrette de coupe (20) et dans le corps de couteau antagoniste (12) garantissent une détection de la profondeur de jeu de coupe au moyen d'au moins un capteur (3).

7. Dispositif selon l'une des revendications précédentes, **caractérisé en ce qu'**un chariot (13), qui porte le corps de couteau antagoniste (12), est réglable par rapport à un guide linéaire (8) à l'aide d'une vis micrométrique entraînée par un moteur pas-à-pas.

8. Dispositif selon l'une des revendications précédentes, **caractérisé en ce qu'**au moins trois et de préférence sept éléments de pression (6) sont disposés d'une manière répartie sur la longueur du corps de couteau antagoniste (12).

9. Dispositif selon l'une des revendications précédentes, **caractérisé en ce que** les éléments de pression sont des goujons thermiques ou des éléments Peltier ou organes de réglage mécaniques.

10. Dispositif selon l'une des revendications précédentes, **caractérisé en ce qu'**au moins un capteur (3) est disposé dans la zone médiane de l'étendue en longueur du corps de couteau antagoniste (12) et que de préférence plusieurs capteurs (3) sont disposés en étant répartis de façon uniforme sur la longueur du corps de couteau antagoniste (12).

11. Dispositif selon l'une des revendications précédentes, **caractérisé en ce que** dans la coopération entre le chariot (13) et le guide linéaire (8), on peut réaliser un réglage complémentaire approximatif sur une distance allant jusqu'à 10 mm entre les couteaux (11) du rotor (1) et l'arête de coupe (9) du corps de couteau antagoniste (12).

12. Dispositif selon l'une des revendications 5 à 11, **caractérisé en ce qu'**avec les éléments de pression (6) on peut réaliser un réglage complémentaire du corps de couteau antagoniste (12) jusqu'à 0,5 mm, avec une précision de 0,001 mm.

13. Dispositif selon l'une des revendications 5 à 12, **caractérisé en ce que** des modifications du jeu de coupe (16), conditionnées par la charge et par la température, peuvent être compensées au moyen d'un circuit de régulation, moyennant un couplage de réaction des grandeurs de mesure de distance détectées par les capteurs (3), sur un appareil de commande et de régulation à l'aide des éléments de pression (6) situés dans le corps de mesure (12).

14. Utilisation du dispositif selon l'une des revendications précédentes, pour réaliser la granulation de boudins de matière thermoplastique.

15. Procédé de réglage du jeu de coupe entre un rotor (1) comportant un couteau (11) et pouvant tourner autour d'un axe (10), et un corps de couteau antagoniste (12) pouvant être fixé, qui porte une arête de coupe (9) et qui peut être réglé au moyen d'un mécanisme de réglage qui agit radialement par rapport à l'axe (10) du rotor, par rapport aux couteaux (11) du rotor (1) pour l'optimisatio du jeu, le corps de couteau antagoniste (2) possédant un profil en forme de U, avec une première branche (14), qui forme l'arête de coupe (9), et une seconde branche (15), qui supporte le corps de couteau antagoniste (12), selon lequel pour l'écartement par flexion élastique des branches, il est prévu des éléments de pression disposés entre les branches (14, 15), et le procédé comportant les étapes opératoires suivantes:
- réglage approximatif de la profondeur du jeu de coupe lorsque le rotor est à l'arrêt,
- détection d'une profondeur de jeu de coupe lorsque le rotor (1) tourne et que le corps de couteau antagoniste (12) est fixe,
- contrôle du jeu de coupe (16) en fonctionnement à l'aide d'au moins un capteur (3) disposé dans le corps de couteau antagoniste (12), en coopération avec un appareil de commande et de régulation,
- évaluation et comparaison des grandeurs de distance mesurées entre le rotor (1) qui tourne et l'arête de coupe fixe (9) du corps de couteau antagoniste (12) à des valeurs de consigne dans l'appareil de commande et de régulation,
- asservissement du jeu de coupe en fonctionnement à l'aide d'indications de réglage envoyées aux éléments de pression (6), qui sont disposés dans le corps de couteau antagoniste (12).

16. Procédé selon la revendication 15, **caractérisé en ce qu'**en supplément une régulation précise de la profondeur de jeu de coupe est exécutée, en fonctionnement, en coopération avec le capteur (3) et un dispositif d'entraînement à vis micrométrique utilisé pour l'adaptation du jeu de coupe, et qui entraîne un guide linéaire (8), qui est disposé en étant écarté du parallélisme en faisant un angle avec l'axe (10) du rotor, et dont le chariot (13) maintient l'arête de coupe (9) du corps de couteau antagoniste (12) parallèlement à l'axe (10) du rotor.
